# EUROPEAN PATENT APPLICATION

(11) **EP 4 636 926 A1**
(43) Date of publication of application: **22.10.2025**
(21) Application number: 23907844.7
(22) Date of filing: 21.12.2023
(51) Int. Cl.: H01M 50/383, H01M 10/658, H01M 50/273, H01M 50/502, H01M 50/249

(54) **BATTERY MODULE AND BATTERY PACK WITH RETARDED HEAT PROPAGATION**

(30) Priority: 22.12.2022 KR 20220182336
(71) Applicant: LG Energy Solution, Ltd., Seoul 07335 (KR)
(72) Inventor: LEE, Junghoon, Daejeon 34122 (KR); JUNG, Hyemi, Daejeon 34122 (KR); PARK, Minsoo, Daejeon 34122 (KR); KIM, Kwangmo, Daejeon 34122 (KR)
(74) Representative: Plasseraud IP
(86) International application number: PCT/KR2023/021354
(87) International publication number: WO 2024/136561

(57) **Abstract**

The present invention provides a structure of a battery module including a battery cell laminate; a bus bar frame connected to a front portion of the battery cell laminate and provided with a terminal; a module frame having an open front portion and accommodating the battery cell laminate; an end plate covering the front portion of the module frame and provided with a terminal exposing port exposing the terminal to outside; and a thermal expansion member fastened together with the terminal, wherein the thermal expansion member expands when heated.

## Description

### [TECHNICAL FIELD]

This application claims the benefit of priority based on Korean Patent Application No. 10-2022-0182236 filed on December 22, 2022, entire content disclosed in the document of the patent applications is included as a part of this specification.

The present invention relates to a structure of a battery module and a battery pack including a plurality of battery modules capable of delaying thermal propagation between battery modules.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small a size and weight as possible, rectangular batteries and pouch-type batteries that may be stacked with high integration and have a small weight-to-capacity battery are mainly used as battery cells for medium to large-sized battery modules.

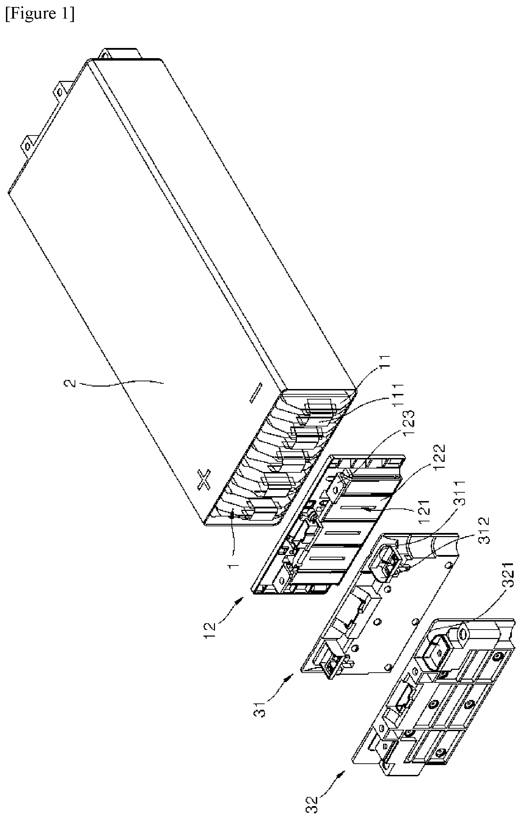

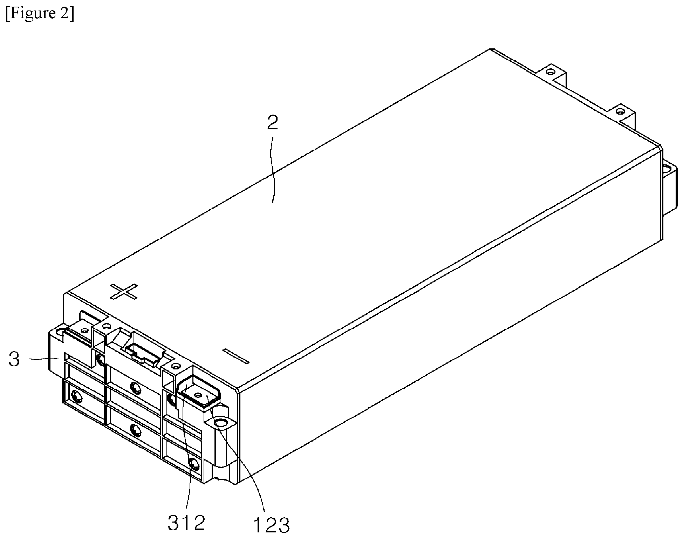

FIGS. 1 and 2 are an exploded perspective view and a perspective view, respectively, illustrating a structure of a battery module. Referring to FIGS. 1 and 2, a battery module is manufactured by accommodating, in a module frame 2 having an open front portion, a battery cell laminate 1 having a plurality of pouch-type battery cells 11 stacked therein.

A bus bar frame 12 is connected to a front portion of the battery cell laminate 1. The bus bar frame 12 is provided with a module bus bar 122 to which electrode leads 111 protruding from the battery cell 11 are welded. The module bus bar 122 may be connected to a pair of terminals 123 with different polarities for connecting to external components.

The front portion of the module frame 2 is covered by an end plate 3 including a first plate 31 made of synthetic resin material and a second plate 32 made of metal material. The second plate 32 is disposed in front of the first plate 31. The first plate 31 and the second plate 32 are provided with a first terminal exposing port 311 and a second terminal exposing port 321, respectively, that expose the terminal 123. Here, in order to insulate the terminal 123 from the second plate 32, the terminal insulator 312 provided at the first plate 31 is exposed through the second terminal exposing port 321.

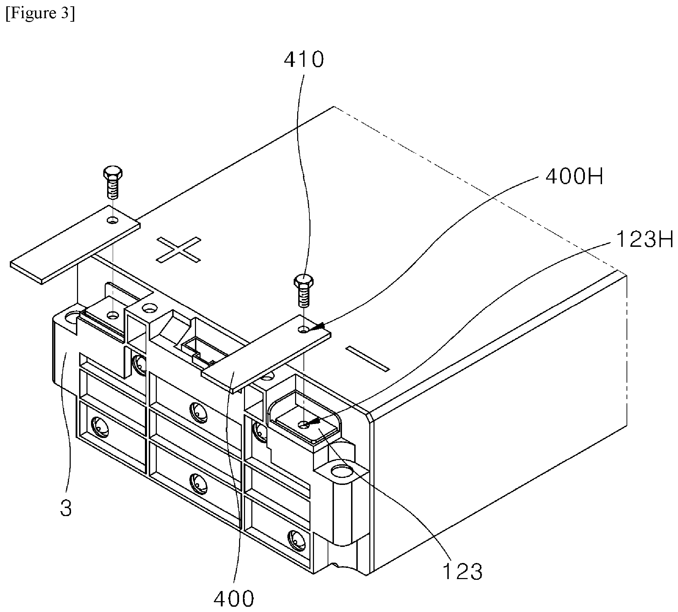

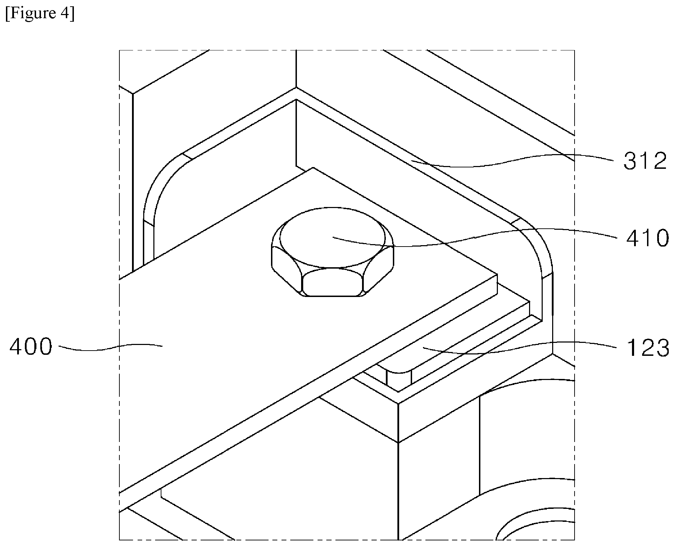

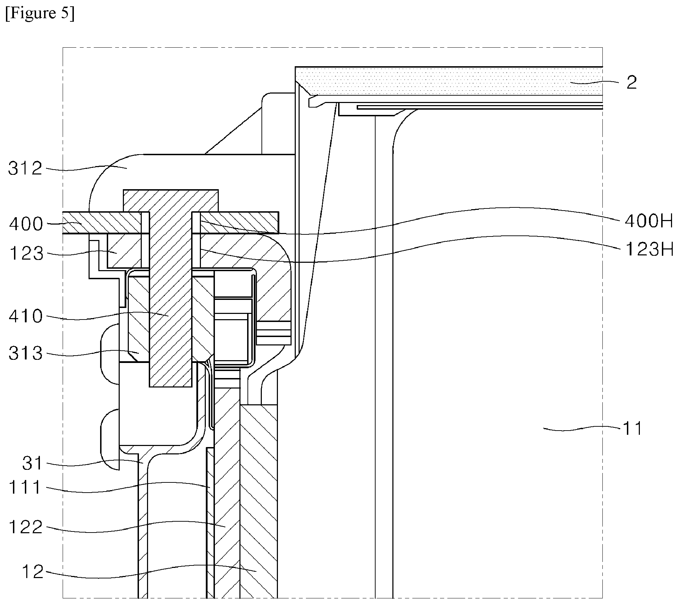

FIG. 3 illustrates a fastening structure of a terminal of a battery module and a pack bus bar, and FIGS. 4 and 5 are partially enlarged and cross-sectional views of the battery module of FIG. 3 with a second plate removed. Referring to FIGS. 3 to 5, a pack bus bar 400 is fastened on the terminal 123. Here, the terminal 123 and the pack bus bar 400 are provided with a first fastening hole 123H and a second fastening hole 400H vertically penetrating therethrough, respectively, and the fastening member 410 passes through the first fastening hole 123H and the second fastening hole 400H and fixed to the fixing part 313 provided on the end plate 3 to fasten the terminal 123 and the pack bus bar 400 to each other. A plurality of the battery modules are arranged to face each other front and rear, and are connected in series or parallel by the pack bus bar 400, thereby forming a battery pack.

Meanwhile, the battery cell 11 may ignite due to a short circuit, shock, temperature elevation, etc. When the battery cell 11 ignites, high-temperature gas is discharged from the inside of the battery cell 11. Here, the first plate 31 may be heated and melted by the gas. Accordingly, as the internal pressure of the module frame 2 increases explosively, the gas may be discharged in the forward direction through the gap between the first fastening hole 123H and the fastening member 410, the gap between the second fastening hole 400H and the fastening member 410 and the cavity generated when the first plate 31 melts.

In such case, another battery module within the battery pack disposed in front of the ignited battery module may be heated by the gas. Just as high-temperature gas generated within the battery module is likely to be discharged to the outside through the front portion, high-temperature gas outside the battery module is also likely to be introduced into the interior through the forward portion of the battery module. Due to such thermal propagation between the battery modules, thermal runaway, in which the battery modules ignite in succession, may occur.

### [DETAILED DESCRIPTION OF THE INVENTION]

### [TECHNICAL PROBLEM]

In order to solve problems of the above-described prior art, it is an object of the present invention to provide a structure of a battery module capable of delaying or preventing gas discharge in a certain direction when ignited. Specifically, it is an object of the present invention to provide a battery module capable of delaying or preventing the discharge of gas through the front portion of the battery module where a terminal exposing port is provided.

It is another object of the present invention to provide a structure of a battery module capable of delaying or preventing the discharged gas from flowing back into an adjacent battery module.

It is yet another object of the present invention to provide a structure of a battery module capable of guiding gas to be discharged in a direction other than the forward direction when ignited.

It is yet another object of the present invention to provide a battery module and a structure of a battery pack capable of delaying or preventing thermal propagation between battery modules.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

In order to solve above-described problems, the present invention provides a battery module including: a battery cell laminate; a bus bar frame connected to a front portion of the battery cell laminate and provided with a terminal; a module frame having an open front portion and accommodating the battery cell laminate; an end plate covering the front portion of the module frame and provided with a terminal exposing port exposing the terminal to outside; and a thermal expansion member fastened together with the terminal, wherein the thermal expansion member expands when heated.

The above-described technical solution may be applied to a battery module with a risk of high-temperature gas being discharged toward the exposed terminals when the battery cell ignites. In particular, the above-described technical solution may be applied to a battery module including synthetic resin material, which may be melted by the gas, disposed at the exposed terminal.

The thermal expansion member may be connected directly to the terminal or may be connected through a pack bus bar. The pack bus bar may be electrically connected to the terminal. The thermal expansion member may be fastened at location higher than the terminal.

The terminal, the pack bus bar and the thermal expansion member may include a first fastening hole, a second fastening hole and a third fastening hole vertically penetrating therethrough, respectively, and the battery module may further include a fastening member simultaneously penetrating the first fastening hole, the second fastening hole and the third fastening hole to fasten the terminal, the pack bus bar and the thermal expansion member.

The fastening member may include a head interfering with the thermal expansion member, and may be fixed at a lower end portion thereof by being engaged with a fixing part provided at the end plate.

The end plate may include: a first plate including a synthetic resin material and equipped with a first terminal exposing port; and a second plate provided outer than the first plate in lengthwise direction, including a metal material, and provided with a second terminal exposing port.

The first plate may include a terminal insulator exposed to outside through the second terminal exposing port for the insulation between the second plate and the terminal. Here, the thermal expansion member may include: a first part in contact with the pack bus bar; and a second part in contact with the terminal insulator.

When the battery module ignites, the volume of the thermal expansion member may expand to fill empty spaces such as the gap between the fastening holes and the fastening member, the gap generated when the first plate melts, and the gap between the terminal and the second plate, thereby delaying or preventing high-temperature gas from being discharged through the front portion of the battery module.

The battery module may further include a pressing member fastened together with the thermal expansion member and the terminal on the thermal expansion member.

The terminal, the pack bus bar, the thermal expansion member and the pressing member may include a first fastening hole, a second fastening hole, a third fastening hole and a fourth fastening hole vertically penetrating therethrough, respectively, and the battery pack may further include a fastening member simultaneously penetrating the first fastening hole, the second fastening hole, the third fastening hole and the fourth fastening hole to fasten the terminal, the pack bus bar, the thermal expansion member and the pressing member.

Here, the fastening member may include a head interfering with the thermal expansion member, and may be fixed at a lower end portion thereof by being engaged with a fixing part provided at the end plate.

The pressing member may include a flame retardant material. That is, the pressing member may be made of a material that maintains the shape thereof even when heated to a high temperature to provide a reaction force against the expansion of the thermal expansion member.

The pressing member may have a shape corresponding to that of the thermal expansion member to cover and press inward a portion of a surface of the thermal expansion member. As a result, the thermal expansion member may expand further inward compared to the case where the pressing member is not provided, and may fill gaps present at the front portion of the battery module more tightly.

The battery module may further include: a flame retardant cover covering a surface of the module frame; and a pressing and fixing part protruding and extending from a front end of the flame retardant cover, and fastened to the thermal expansion member and the terminal on the thermal expansion member.

The flame retardant cover may include a flame retardant material. The flame retardant cover may have a rigid body or a flexible body. The flame retardant cover may cover the upper surface of the module frame. Additionally, the flame retardant cover may cover the side surface of the module frame.

A venting hole may be provided on the upper surface of the flame retardant cover for discharging gas generated in the module frame. When the flame retardant cover has a flexible body, the venting hole may have a slit shape. Here, a venting hole may be provided not only on the flame retardant cover but also on the upper surface of the module frame. By providing the venting holes on the flame retardant cover and the upper surface of the module frame, gas in the battery module that is not discharged in forward direction may be discharged in the upward direction. Here, the venting hole provided in the flame retardant cover may be smaller than the venting hole provided in the module frame.

The flame retardant cover may include a pressing and fixing part that protrudes and extends from the front end thereof and is fastened together with the terminal, the pack bus bar and the thermal expansion member. The pressing and fixing part may include a flame retardant material and may have a rigid body or a flexible body. Alternatively, the pressing and fixing part may have a reinforced structure by combining a rigid body with a flexible body.

The terminal, the pack bus bar, the thermal expansion member and the pressing and fixing part may include a first fastening hole, a second fastening hole, a third fastening hole and a fifth fastening hole vertically penetrating therethrough, respectively, and the battery module may further include a fastening member simultaneously penetrating the first fastening hole, the second fastening hole, the third fastening hole and the fifth fastening hole to fasten the terminal, the pack bus bar, the thermal expansion member and the pressing and fixing part.

Here, the fastening member may include a head interfering with the thermal expansion member, and may be fixed at a lower end portion thereof by being engaged with a fixing part provided at the end plate.

The pressing member may have a shape corresponding to that of the thermal expansion member to cover and press inward a portion of a surface of the thermal expansion member. As a result, the thermal expansion member can expand further inward compared to the case where the pressing and fixing part is not provided, and may fill gaps present at the front portion of the battery module more tightly.

The battery module may include neither of the pressing member and the pressing and fixing part, or include only one of the pressing member and the pressing and fixing part, or both of the pressing member and the pressing and fixing part. Alternatively, the pressing and fixing part may be integrated with the pressing member or may substitute for the pressing member. When both of the pressing member and the pressing and fixing part are provided, the pressing and fixing part may be disposed above the pressing member or under the pressing member.

The thermal expansion member may include a material selected from a group of thermal expansion resins including soft urethane, hard urethane, rigid polyurethane and phosphorus-based flame retardants. The thermal expansion member may include a foam material. However, the thermal expansion member may include any material as long as the volume of the material expands when heated, and is not limited to any one of the materials listed above.

The present invention also provides a battery pack including the battery module and a structure of a vehicle including the battery pack.

A plurality of the battery modules may be built into one pack frame to form a high voltage and/or high capacity battery pack. Within the battery pack, the battery modules may be arranged to face each other in front and rear directions. Here, the plurality of pack bus bars may electrically connect the plurality of terminals of the plurality of battery modules in series or in parallel.

The battery pack may be employed as an energy source built in the vehicles including electric vehicles and hybrid vehicles.

### [ADVANTTAGEOUS EFFECTS]

The present invention may provide a structure of a battery module in which the space present at the front portion of the battery module where the terminal is provided is filled by a thermal expansion member, thereby delaying or preventing discharge and inflow of gas in the forward direction.

The present invention may provide a structure of a battery module capable of preventing the discharge of gas through an empty space generated when the first plate melts due to high-temperature heat by the thermal expansion member expanding in case of ignition.

The present invention may provide a structure of a battery module capable of preventing the discharge of gas through a gap between a terminal exposing port and a terminal by the thermal expansion member expanding in case of ignition.

The present invention may provide a structure of a battery module capable of preventing the discharge of gas through a gap between a fastening hole and a fastening member provided at a terminal and a pack bus bar by the thermal expansion member expanding in case of ignition.

In the battery module according to an embodiment of the present invention, high-temperature gas generated in case of ignition may be guided to be discharged in upward direction rather than forward direction.

In the battery module according to an embodiment of the present invention, the pressing and fixing part fixes the flame retardant cover such that the flame retardant cover may not fall off from the module frame despite high pressure.

The present invention may provide a battery module and a structure of a battery pack in which thermal propagation between battery modules is delayed or prevented.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 are an exploded perspective view and a perspective view, respectively, illustrating a structure of a battery module.
FIG. 3 illustrates a fastening structure of a terminal of a battery module and a pack bus bar.
FIGS. 4 and 5 are partially enlarged and cross-sectional views of the battery module of FIG. 3 with a second plate removed.
FIGS. 6 and 7 are an exploded perspective view and a perspective view, respectively, illustrating a structure of a battery module according to a first embodiment of the present invention.
FIGS. 8 and 9 are partially enlarged and cross-sectional views of a battery module with a second plate removed according to the first embodiment of the present invention.
FIG. 10 illustrates an expansion action of a thermal expansion member according to the first embodiment of the present invention where the arrow indicates an expansion direction of the thermal expansion member.
FIGS. 11 and 12 are an exploded perspective view and a perspective view, respectively, illustrating a structure of a battery module according to a second embodiment of the present invention.
FIGS. 13 and 14 are partially enlarged and cross-sectional views of a battery module with a second plate removed according to the second embodiment of the present invention.
FIG. 15 illustrates an expansion action of a thermal expansion member according to the second embodiment of the present invention where the arrow indicates an expansion direction of the thermal expansion member.
FIGS. 16 and 17 are an exploded perspective view and a perspective view, respectively, illustrating a structure of a battery module according to a third embodiment of the present invention.
FIG. 18 illustrates a battery pack including a battery module according to the present invention, and FIG. 19 illustrates a vehicle including the battery pack of FIG. 18.

### [DESCRIPTION OF REFERENCE NUMERALS]

- 1:: battery cell laminate
11: battery cell
111: electrode lead
12: bus bar frame
121: slit
122: module bus bar
123: terminal
123H: first fastening hole
- 2:: module frame
- 3:: end plate
31: first plate
311: first terminal exposing port
312: terminal insulator
313: fixing part
32: second plate
321: second terminal exposing port

- 400:: pack bus bar
400H: second fastening hole
- 410:: fastening member
411: head
412: body
- 420:: thermal expansion member
420H: third fastening hole
421: first part
422: second part
- 430:: pressing member
430H: fourth fastening hole
- 440:: flame retardant cover
441: pressing and fixing part
441H: fifth fastening hole
- M:: battery module
- P:: battery pack
- V:: vehicle
- X:: longitudinal/forward/backward direction
- Y:: width direction/left and right direction
- Z:: height direction/up and down direction

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

FIGS. 1 and 2 are an exploded perspective view and a perspective view, respectively, illustrating a structure of a battery module. Referring to FIGS. 1 and 2, a battery module includes: a battery cell laminate 1; a module frame 2 having an open front portion and accommodating the battery cell laminate 1; and an end plate 3 covering the front portion of the module frame 2.

The battery cell laminate 1 may be manufactured by stacking a plurality of pouch-type battery cells 11. Here, the battery cell 11 may include an electrode lead 111 protruding outward. However, regardless of the name, the battery cell laminate 1 is not limited to a specific structure or shape and may be one or more assemblies constituting a battery.

The battery cell laminate 1 according to the first to third embodiments of the present invention may be manufactured by stacking a plurality of battery cells 11. Here, the battery cell 11 may include the electrode lead 111 protruding from the front end thereof in forward direction.

A bus bar frame 12 may be connected to the front portion of the battery cell laminate 1. The bus bar frame 12 may include a slit 121 penetrated by the electrode lead 111 and a module bus bar 122 connected to the electrode lead 111. The module bus bar 122 connects the electrode leads 111 in series or in parallel and may be connected to a pair of terminals 123 having different polarities. The bus bar frame 12 does not necessarily have the same structure as above as long as provided with a terminal 123 connected to the electrode lead 111 to connect the battery cell laminate 1 to external devices.

The bus bar frame 12 according to the first to third embodiments of the present invention may include: a plurality of slits 121 penetrated by the electrode leads 111; and a plurality of module bus bar 122 welded to the electrode lead 111. Here, the module bus bar 122 may be connected to a pair of terminals 123 having different polarities, and the pair of terminals 123 may be bent toward front portion.

The module frame 2 may have an open front portion. The module frame 2 may have, for example, a box shape with an open front portion. The module frame 2 may be made of metal material. The module frame 2 may be formed by bonding or assembling a plurality of members.

The module frame 2 according to the first to third embodiments of the present invention may be made of a metal material, and may include: a U-shaped frame (U frame) having open front and rear portions and an open upper portion; and a top plate covering the upper portion. Here, the U frame and the top plate may be welded to be bonded to each other.

The end plate 3 may include a first plate 31 and a second plate 32 disposed in front of the first plate 31. Here, the first plate 31 may include a synthetic resin material, and the second plate 32 may include a metal material. The first plate 31 and the second plate 32 may be provided with a first terminal exposing port 311 and a second terminal exposing port 321, respectively, exposing the terminals 123.

The first plate 31 may include, as a part thereof, a terminal insulator 312 exposed through the second terminal 123. The terminal insulator 312 may be provided between the terminal 123 and the first plate 31 to electrically insulate the same from each other. The terminal insulator 312 may include a portion extending in vertical direction at the lengthwise end and/or widthwise end of the terminal 123.

The end plate 3 according to the first to third embodiments of the present invention may include the first plate 31 including a synthetic resin material and the second plate 32 including a metal material. The first plate 31 and the second plate 32 may include the first terminal exposing port 311 and the second terminal exposing port 321, respectively, exposing the terminal 123. The first plate 31 may include the terminal insulator 312 exposed through the second terminal exposing port 321 and including a portion extending in vertical direction at the lengthwise end and/or widthwise end of the terminal 123.

The present invention provides a structure of a battery module including a thermal expansion member containing a material expanding when heated and fastened together with the terminal to prevent high-temperature gas from being discharged toward the terminals.

The above-described technical solution may be applied to a battery module including exposed terminals with a risk of high-temperature gas being discharged toward the exposed terminals in case of ignition, particularly, to a battery module including a synthetic resin material that may be melted by the gas at the area where the terminals are exposed.

Hereinafter, a preferred embodiment of the present invention will be described with reference to the accompanying drawings.

### [FIRST EMBODIMENT]

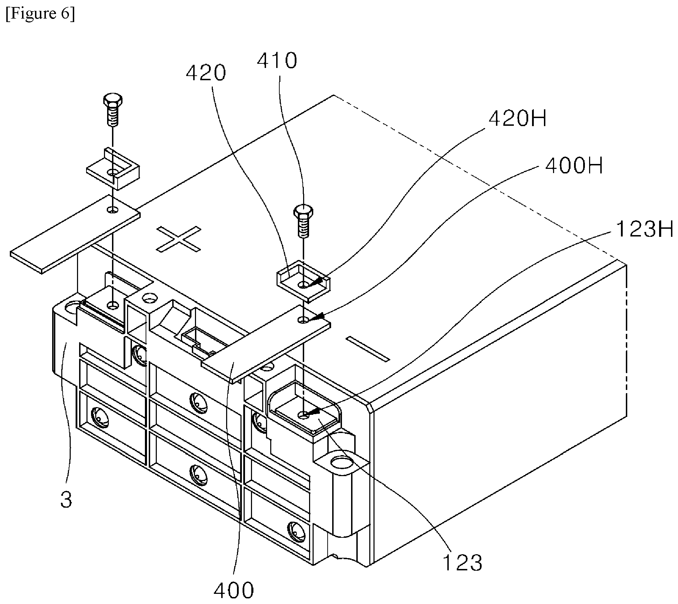

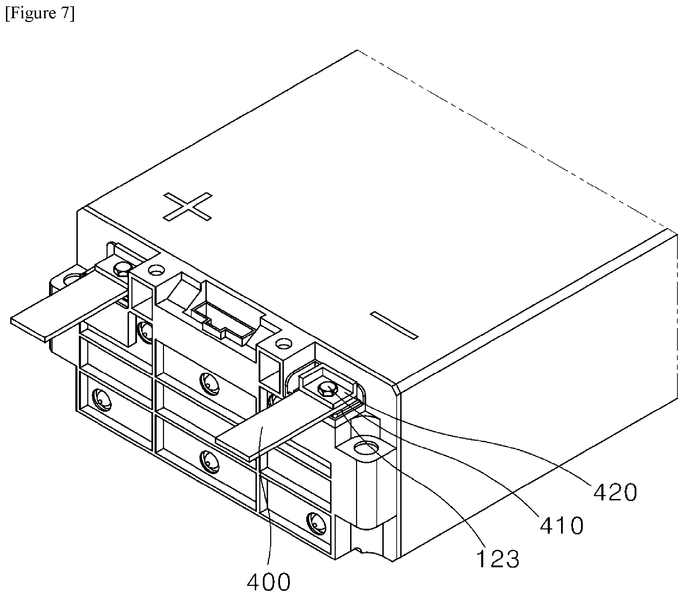

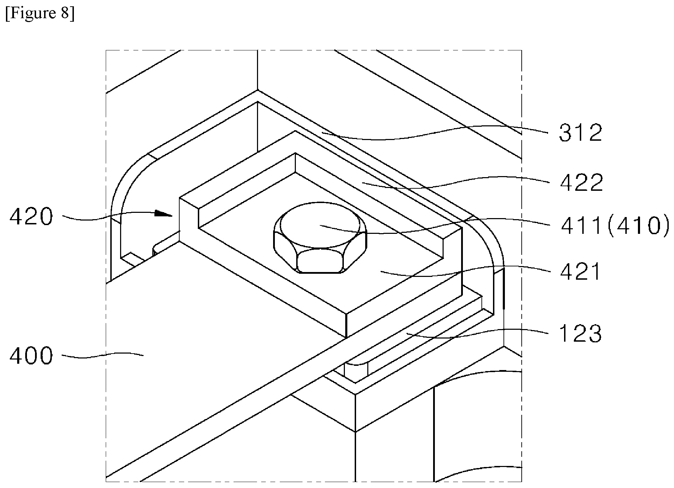

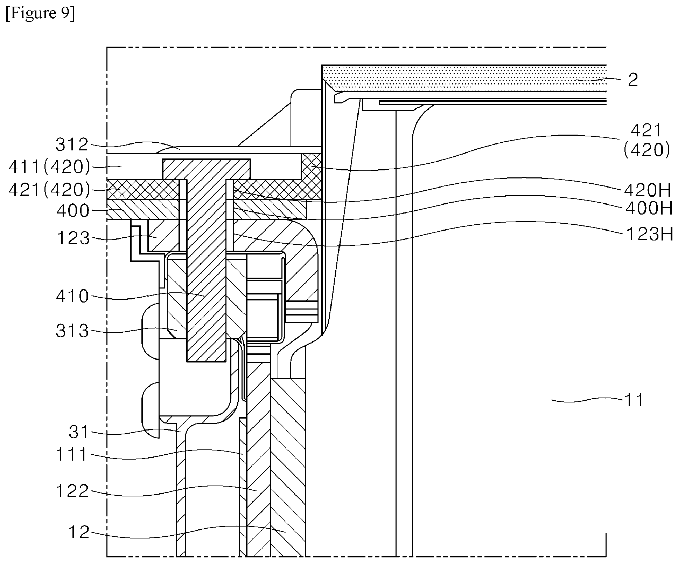

FIGS. 6 and 7 are an exploded perspective view and a perspective view, respectively, illustrating a structure of a battery module according to a first embodiment of the present invention, and FIGS. 8 and 9 are partially enlarged and cross-sectional views of a battery module with a second plate removed according to the first embodiment of the present invention. Referring to FIGS. 6 to 9, a pack bus bar 400 and a thermal expansion member 420 may be fastened to the terminal 123.

The pack bus bar 400 may be fastened to be in direct contact with the terminal 123 such that the pack bus bar 400 is electrically connected to the terminal 123.

The thermal expansion member 420 may be fastened to the terminal 123 on top of the terminal 123. Here, the thermal expansion member 420 may be fastened to the terminal 123 with the pack bus bar 400 interposed therebetween.

The thermal expansion member 420 may include a material that expands in volume when heated. For example, the thermal expansion member 420 may include a material selected from a group of thermal expansion resins including soft urethane, hard urethane, rigid polyurethane and phosphorus-based flame retardants. Here, the thermal expansion member 420 may include a foam material. However, the thermal expansion member 420 may include any material as long as the volume of the material expands when heated, and is not limited to any one of the materials listed above.

The thermal expansion member 420 may expand in a certain area thereof or in a certain direction when heated. For example, the lower portion of the thermal expansion member 420 may include a thermal expansion resin, and the upper portion of the thermal expansion member 420 may include a heat-resistant resin rather than a thermal expansion resin such that the bottom surface thereof expands in downward direction while the upper surface thereof does not expand when heated.

The thermal expansion member 420 may include: a first part 421 in contact with the pack bus bar 400; and a second part 422 in contact with the terminal insulator 312. Here, the first part 421 may be a horizontal portion in contact with the surface of the pack bus bar 400, and the second part 422 may be a vertical portion in contact with the surface of the terminal insulator 312. It is preferable that the thermal expansion member 420 covers the area where the first plate 31 is exposed and the gap between the second plate 32 and the terminal 123 as much as possible.

The terminal 123, the pack bus bar 400 and the thermal expansion member 420 may be provided with a first fastening hole 123H, a second fastening hole 400H and a third fastening hole 420H vertically penetrating therethrough, respectively. Here, the battery module may further include a fastening member 410 simultaneously penetrating the first fastening hole 123H, the second fastening hole 400H and the third fastening hole 420H to fasten the terminal 123, the pack bus bar 400 and the thermal expansion member 420.

The fastening member 410 may include: a head 411 interfering with the thermal expansion member 420; and a body 412 passing through the second fastening hole 400H and the third fastening hole 420H. Here, the diameter of the head 411 may larger than that of the third fastening hole 420H in the horizontal direction. The body 412 may be fixed by being engaged with a fixing part provided 313 at the end plate 3. For example, the fastening member 410 may be a bolt with male thread at the lower end portion thereof, and the fixing part 313 may be a nut with female thread mounted on the first plate 31 such that the outer circumferential surface of the lower end portion of the fastening member 410 and the inner circumferential surface of the fixing part 313 may be fixed by engaging with each other. As a result, the pack bus bar 400, the thermal expansion member 420 and the pressing member 430 are pressed vertically inward between the head 411 and the terminal 123 to be fastened to the terminal 123.

However, the fastening among the terminal 123, the pack bus bar 400 and the thermal expansion member 420 may be any method as long as the terminal 123 and the pack bus bar 400 are electrically connected to each other, and the thermal expansion member 420 is fastened onto the terminal 123, and it is not necessary that the fastening is achieved according to the specific method described above.

According to the first embodiment, a first fastening hole 123H may be provided at the terminal 123, the pack bus bar 400 provided with a second fastening hole 400H and the thermal expansion member 420 provided with a third fastening hole 420H may be sequentially stacked on the terminal 123. The fastening member 410 may include a bolt with a head 411 having a diameter larger than the third fastening hole 420H and a body 412 having a male thread on the lower end portion thereof fixed by engaging with the fixing part 313 having a female thread on the inner circumferential surface thereof. As a result, the pack bus bar 400 and the thermal expansion member 420 may be fastened to the terminal 123. Here, the thermal expansion member 420 may include a foam material containing any one of soft urethane, hard urethane and phosphorus-based flame retardant material. The thermal expansion member 420 may include the first part 421 in contact with the surface of the pack bus bar 400 in horizontal direction and the second part 422 in contact with the surface of the terminal insulator 312 in vertical direction.

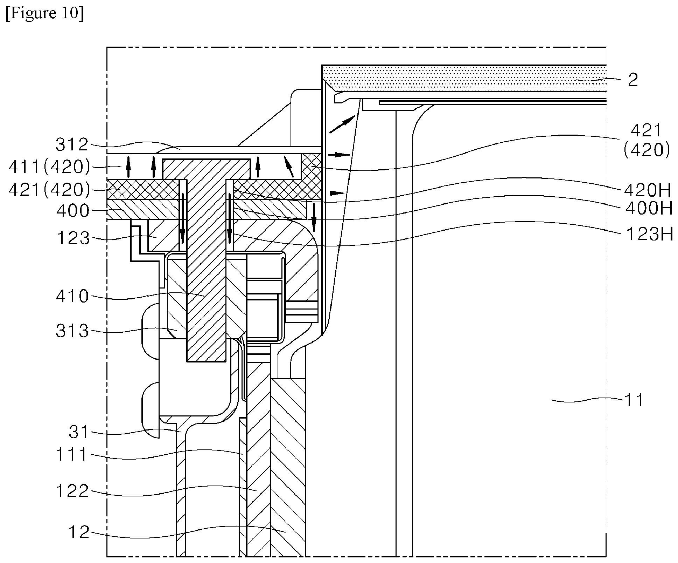

FIG. 10 illustrates an expansion action of a thermal expansion member according to the first embodiment of the present invention. Here, the arrow indicates an expansion direction of the thermal expansion member. Referring to FIG. 10, when the battery cell 11 ignites in the battery module according to the first embodiment, high-temperature gas may be discharged from the front portion of the battery cell 11 where the electrode lead 111 is provided. Here, the first plate 31 may be melted by the gas.

The thermal expansion member 420 may be heated by the gas and expand in volume. The thermal expansion member 420 expands in all directions to fill the space through which the gas may pass including the space between the terminal 123 and the end plate 3, the space between the first fastening hole 123H and the fastening member 410, and the space generated when the first plate 31 melts. As the thermal expansion member 420 fills the spaces through which the gas may pass, discharge of the gas through the front portion of the battery module may be delayed or prevented.

### [SECOND EMBODIMENT]

Hereinafter, parts not separately described in the second embodiment are the same as those in the first embodiment.

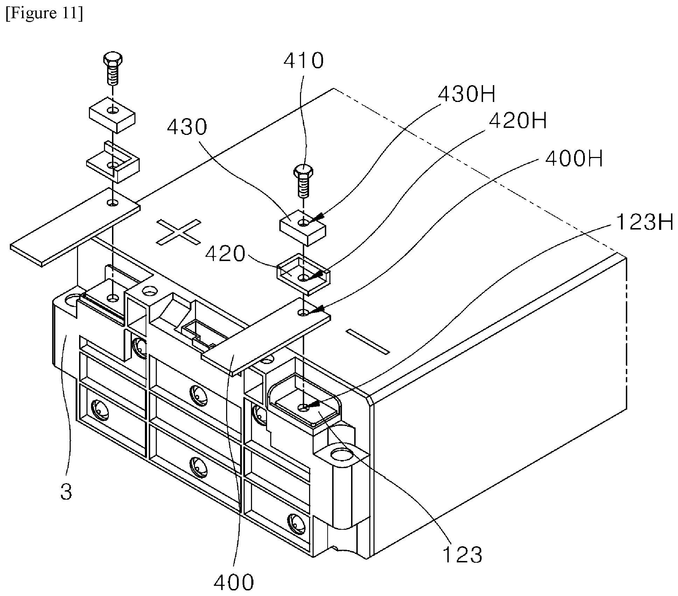

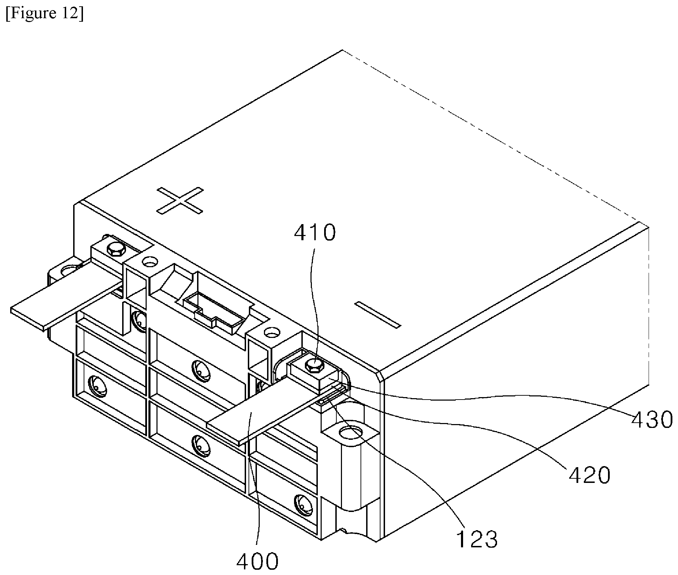

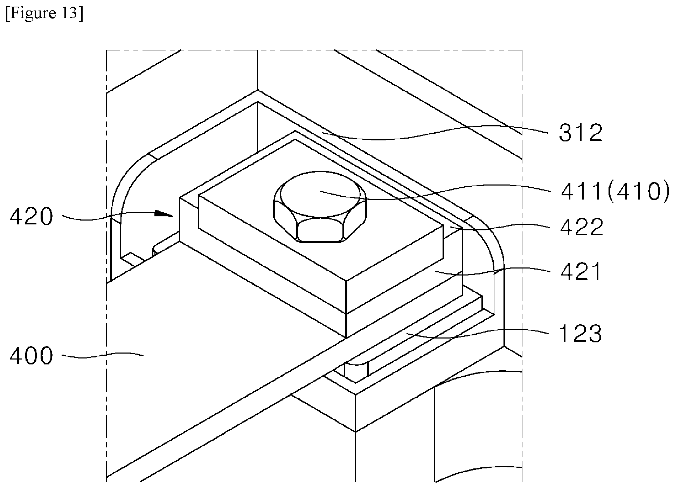

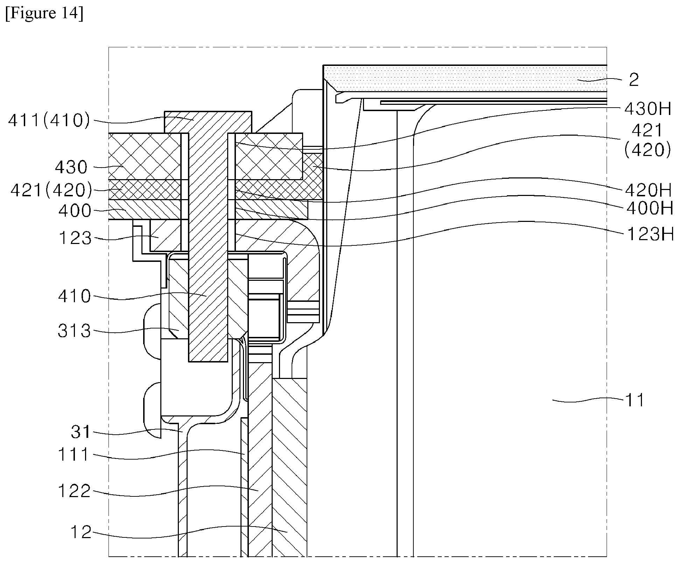

FIGS. 11 and 12 are an exploded perspective view and a perspective view, respectively, illustrating a structure of a battery module according to a second embodiment of the present invention, and FIGS. 13 and 14 are partially enlarged and cross-sectional views of a battery module with a second plate removed according to the second embodiment of the present invention. Referring to FIGS. 11 to 14, a pressing member 430 may be fastened to the terminal 123 in addition to the pack bus bar 400 and the thermal expansion member 420.

The pressing member 430 may be fastened to the terminal 123 on the thermal expansion member 420 with the thermal expansion member 420 and the pack bus bar 400 interposed therebetween.

The pressing member 430 may be provided to be in contact with a portion of the surface of the thermal expansion member 420. Specifically, the bottom surface of the pressing member 430 may cover a portion of the surface of the first part 421 of the thermal expansion member 420 in horizontal direction, and the side surface of the pressing member 430 may cover a portion of the surface of the second part 422 of the thermal expansion member 420 in vertical direction. In order to achieve this, the pressing member 430 may have a shape corresponding to the surface of the thermal expansion member 420.

The pressing member 430 may be provided with a fourth fastening hole 430H vertically penetrating therethrough. Here, the fastening member 410 may simultaneously penetrate the first fastening hole 123H, the second fastening hole 400H, the third fastening hole 420H and the fourth fastening hole 430H.

The head 411 may be formed to have a diameter larger than the fourth fastening hole 430H and may interfere with the pressing member 430. The lower end portion of the body 412 may be fixed by engaging with the fixing part 313. As a result, the pack bus bar 400, the thermal expansion member 420 and the pressing member 430 may be pressed vertically inward between the head 411 and the terminal 123 to be fastened to the terminal 123.

However, the fastening among the terminal 123, the pack bus bar 400, the thermal expansion member 420 and the pressing member 430 may be any method as long as the terminal 123 and the pack bus bar 400 are electrically connected to each other, the thermal expansion member 420 is fastened onto the terminal 123, and the pressing member 430 is fastened onto the thermal expansion member 420, and it is not necessary that the fastening is achieved according to the specific method described above.

According to the first embodiment, a first fastening hole 123H may be provided at the terminal 123, the pack bus bar 400 provided with a second fastening hole 400H, the thermal expansion member 420 provided with a third fastening hole 420H and the pressing member 430 provided with a fourth fastening hole 430H may be sequentially stacked on the terminal 123. The fastening member 410 may include a bolt with a head 411 having a diameter larger than the fourth fastening hole 430H and a body 412 having a male thread on the lower end portion thereof fixed by engaging with the fixing part 313 having a female thread on the inner circumferential surface thereof. As a result, the pack bus bar 400, the thermal expansion member 420 and the pressing member 430 may be fastened to the terminal 123. Here, the thermal expansion member 420 may include the first part 421 in contact with the pack bus bar 400 in horizontal direction and the second part 422 in contact with the terminal insulator 312 in vertical direction. The pressing member 430 may have a rectangular parallelepiped shape corresponding to the shape of the thermal expansion member 420 such that the bottom surface thereof covers the surface of the first part 421, and the side surface thereof may cover the surface of the second part 422.

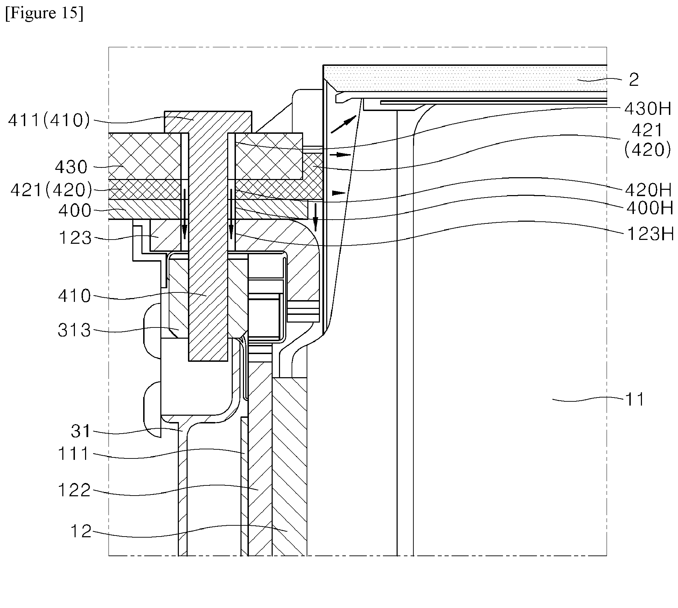

FIG. 15 illustrates an expansion action of a thermal expansion member according to the second embodiment of the present invention where the arrow indicates an expansion direction of the thermal expansion member. Referring to FIG. 15, when the battery cell 11 ignites in the battery module according to the second embodiment, the pressing member 430 covers and presses inward the surface of the thermal expansion member 420 to suppress the expansion of the expansion member 420 in the upward and forward directions and increase the volume expanded in the downward, reverse and lengthwise directions. As a result, the thermal expansion member 420 may fill the spaces through which the gas passes more quickly and densely.

### [THIRD EMBODIMENT]

Hereinafter, parts not separately described in the third embodiment are the same as those of the first embodiment and the second embodiment.

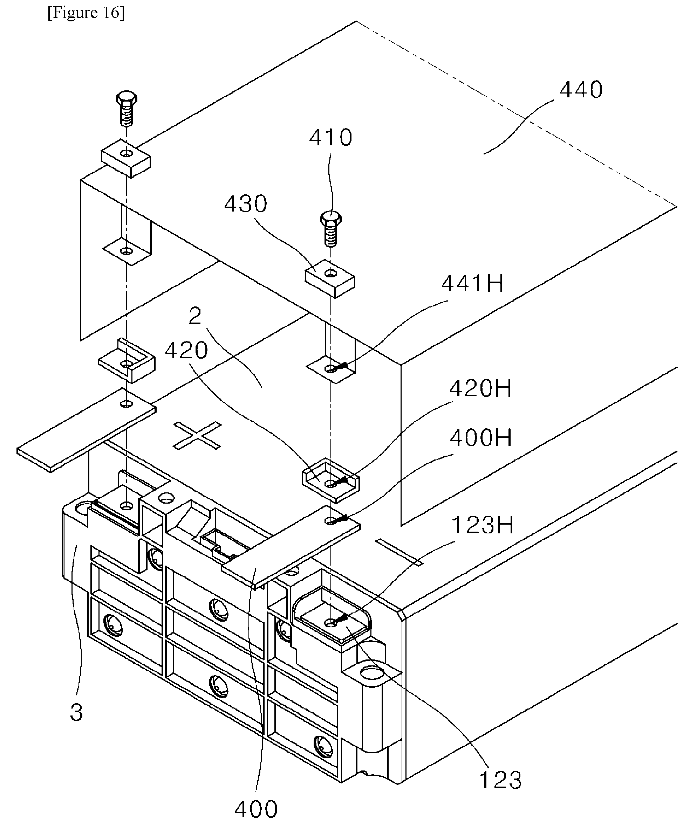

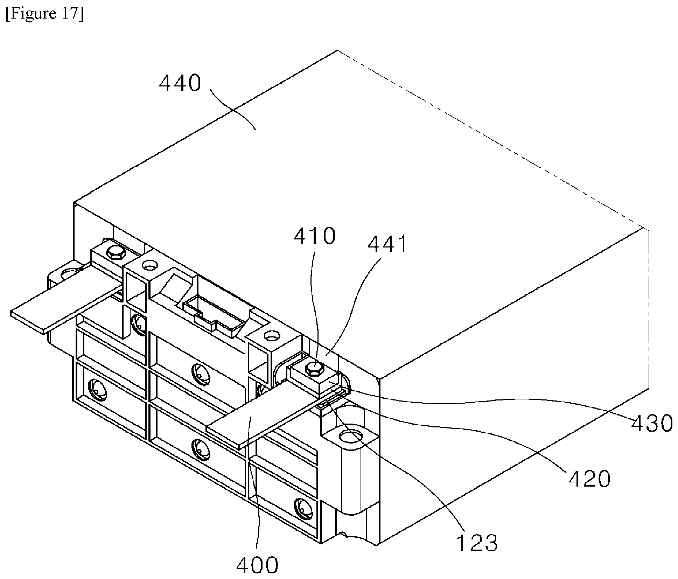

FIGS. 16 and 17 are an exploded perspective view and a perspective view, respectively, illustrating a structure of a battery module according to a third embodiment of the present invention. Referring to FIGS. 16 and 17, the battery module may include a flame retardant cover 440 covering the surface of the module frame 2.

The flame retardant cover 440 may include a flame retardant material. The flame retardant cover 440 may have a rigid body or a flexible body. The flame retardant cover 440 may cover the upper surface of the module frame 2. Additionally, the flame retardant cover 440 may cover the side surface of the module frame 2.

A venting hole may be provided on the upper surface of the flame retardant cover 440 for discharging gas generated in the module frame 2. When the flame retardant cover 440 has a flexible body, the venting hole may have a slit shape. Here, a venting hole may be provided not only on the flame retardant cover 440 but also on the upper surface of the module frame 2. By providing the venting holes on the flame retardant cover 440 and the upper surface of the module frame 2, gas in the battery module that is not discharged in forward direction may be discharged in the upward direction. Here, the venting hole provided in the flame retardant cover 440 may be smaller than the venting hole provided in the module frame 2 such that the discharge of gas from the battery module is facilitated and the inflows of gas back into the battery module is difficult.

The flame retardant cover 440 may include a pressing and fixing part 441 that protrudes and extends from the front end thereof and is fastened together with the terminal 123, the pack bus bar 400 and the thermal expansion member 420. The pressing and fixing part 441 may include a flame retardant material and may have a rigid body or a flexible body. Alternatively, the pressing and fixing part 441 may have a reinforced structure by combining a rigid body with a flexible body.

The battery module may include neither of the pressing member 430 and the pressing and fixing part 441, or include only one of the pressing member 430 and the pressing and fixing part 441, or both of the pressing member 430 and the pressing and fixing part 441. Alternatively, the pressing and fixing part 441 may be integrated with the pressing member 430 or may substitute for the pressing member 430.

When both of the pressing member 430 and the pressing and fixing part 441 are provided, the pressing and fixing part 441 may be disposed above the pressing member 430 or under the pressing member 430.

Hereinafter, the third embodiment exemplifies that both the pressing member 430 and the pressing and fixing part 441 are provided separately. However, it should be understood through the following description that the technical solution of the present invention may be applied to the case where the pressing member 430 and the pressing and fixing part 441 are integrated or combined as described above.

The pressing and fixing part 441 may be provided with a fifth fastening hole 441H vertically penetrating therethrough. Here, the fastening member 410 may simultaneously penetrate the first fastening hole 123H, the second fastening hole 400H, the third fastening hole 420H, the fifth fastening hole 441H and the fifth fastening hole 430H..

When the pressing member 430 is provided on the pressing and fixing part 441, as in the second embodiment, the head 411 of the fastening member 410 interferes with the pressing member 430, and the lower end portion of the body 412 of the fastening member 410 is fixed to the fixing part 313 such that the pack bus bar 400, the thermal expansion member 420, the pressing member 430 and the pressing and fixing part 441 may be pressed vertically inward between the head 411 and the terminal 123 to be fastened to the terminal 123.

When the pressing member 430 is absent or the pressing and fixing part 441 is provided on the pressing member 430, the head 411 may be formed to have a diameter larger than the fifth fastening hole 441H and may interfere with the pressing and fixing part 441. The lower end portion of the body 412 may be fixed by engaging with the fixing part 313. As a result, the pack bus bar 400, the thermal expansion member 420, the pressing member 430, and the pressing and fixing part 441 may be pressed vertically inward between the head 411 and the terminal 123 to be fastened to the terminal 123.

However, the fastening among the terminal 123, the pack bus bar 400, the thermal expansion member 420, the pressing member 430 and the pressing and fixing part 441 may be any method as long as the terminal 123 and the pack bus bar 400 are electrically connected to each other, the thermal expansion member 420 is fastened onto the terminal 123, and the pressing member 430 and/or the pressing and fixing part 441 are fastened onto the thermal expansion member 420, and it is not necessary that the fastening is achieved according to the specific method described above.

According to the third embodiment, a first fastening hole 123H may be provided at the terminal 123, the pack bus bar 400 provided with a second fastening hole 400H, the thermal expansion member 420 provided with a third fastening hole 420H, the pressing and fixing part 441 provided with the fifth fastening hole 441H and protruding and extending from the front end of the flame retardant cover 440 having a flexible body including flame retardant material and covering the upper surface and two sides of the module frame 2 and the pressing member 430 provided with a fourth fastening hole 430H may be sequentially stacked on the terminal 123. The fastening member 410 may include a bolt with a head 411 having a diameter larger than the fourth fastening hole 430H and a body 412 having a male thread on the lower end portion thereof fixed by engaging with the fixing part 313 having a female thread on the inner circumferential surface thereof. As a result, the pack bus bar 400, the thermal expansion member 420 and the pressing member 430 may be fastened to the terminal 123. Here, the thermal expansion member 420 may include the first part 421 in contact with the pack bus bar 400 in horizontal direction and the second part 422 in contact with the terminal insulator 312 in vertical direction. The pressing member 430 may have a rectangular parallelepiped shape corresponding to the shape of the thermal expansion member 420 such that the bottom surface thereof covers the surface of the first part 421, and the side surface thereof may cover the surface of the second part 422.

According to the third embodiment, the pressing member 430 and the pressing and fixing part 441 cover and presses inward the surface of the thermal expansion member 420 to suppress the expansion of the expansion member 420 in the upward and forward directions and increase the volume expanded in the downward, reverse and lengthwise directions. As a result, the thermal expansion member 420 may fill the spaces through which the gas passes more quickly and densely.

In addition, thermal propagation between the battery modules may be delayed due to the flame retardant cover 440. Since the pressing and fixing part 441 is fastened to the terminal 123 through the fastening member 410, the flame retardant cover 440 may not be separated from the module frame 2 in case of rapid increase in the pressure of the battery module.

The present invention also provides a structure of a battery pack including a battery module according to the first to third embodiments of the present invention and a vehicle including the battery pack.

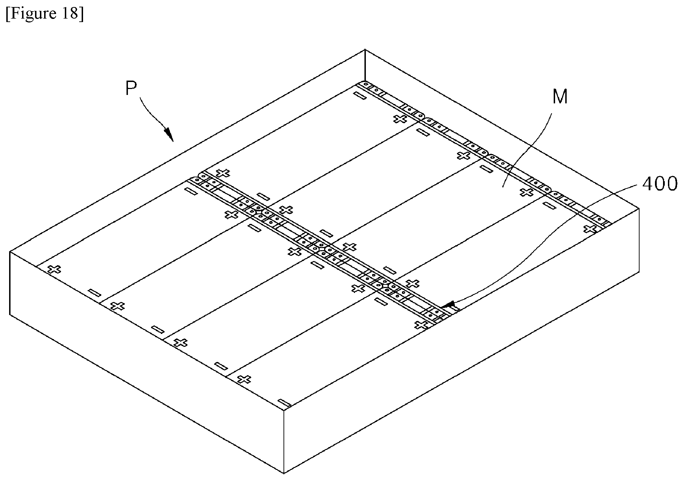

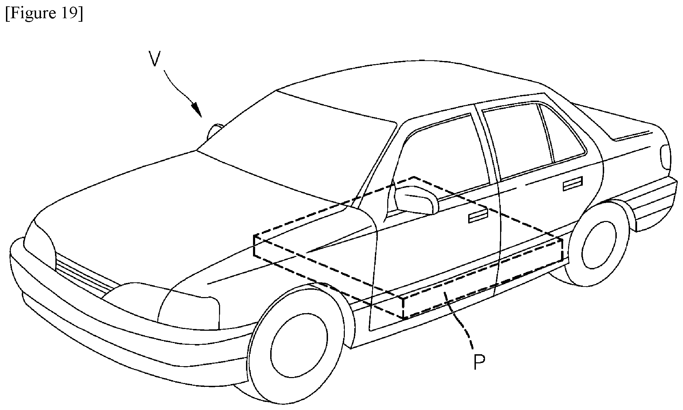

FIG. 18 illustrates a battery pack including a battery module according to the present invention, and FIG. 19 illustrates a vehicle including the battery pack of FIG. 18. Referring to FIGS. 18 and 19, a plurality of battery modules M may be built into one pack frame to form a high voltage and/or high capacity battery pack P. Within the battery pack P, the battery modules M may be arranged to face each other in the forward and reverse directions. Here, the plurality of pack bus bars 400 may electrically connect the plurality of terminals 123 provided in the plurality of battery modules M to each other in series or in parallel. The battery pack P may be embedded as an energy source for a vehicle V including an electric vehicle and a hybrid vehicle.

According to the present invention, even when the battery module M ignites, thermal propagation between the battery modules M is delayed or prevented such that thermal runaway of the battery pack P unit is delayed or prevented, thereby improving the safety of the vehicle V.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery module comprising:
a battery cell laminate;
a bus bar frame connected to a front portion of the battery cell laminate and provided with a terminal;
a module frame having an open front portion and accommodating the battery cell laminate;
an end plate covering the front portion of the module frame and provided with a terminal exposing port exposing the terminal to outside; and
a thermal expansion member fastened together with the terminal,
wherein the thermal expansion member expands when heated.

2. The battery module of claim 1, further comprising a pack bus bar interposed between the terminal and the thermal expansion member to be fastened together with the terminal and the thermal expansion member.

3. The battery module of claim 2, wherein the thermal expansion member is disposed at a location higher than the terminal.

4. The battery module of claim 3, wherein the terminal, the pack bus bar and the thermal expansion member comprise a first fastening hole, a second fastening hole and a third fastening hole vertically penetrating therethrough, respectively, and
further comprising a fastening member simultaneously penetrating the first fastening hole, the second fastening hole and the third fastening hole to fasten the terminal, the pack bus bar and the thermal expansion member.

5. The battery module of claim 4, wherein the fastening member comprises a head interfering with the thermal expansion member, and is fixed at a lower end portion thereof by being engaged with a fixing part provided at the end plate.

6. The battery module of claim 1, wherein the end plate comprises:
a first plate comprising a synthetic resin material and equipped with a first terminal exposing port; and
a second plate provided outer than the first plate in lengthwise direction, comprising a metal material, and provided with a second terminal exposing port.

7. The battery module of claim 6, wherein the first plate includes a terminal insulator exposed to outside through the second terminal exposing port, and
the thermal expansion member comprises:
a first part in contact with the pack bus bar; and
a second part in contact with the terminal insulator.

8. The battery module of claim 1, further comprising a pressing member fastened together with the thermal expansion member and the terminal on the thermal expansion member.

9. The battery module of claim 8, wherein the terminal, the pack bus bar, the thermal expansion member and the pressing member comprise a first fastening hole, a second fastening hole, a third fastening hole and a fourth fastening hole vertically penetrating therethrough, respectively, and
further comprising a fastening member simultaneously penetrating the first fastening hole, the second fastening hole, the third fastening hole and the fourth fastening hole to fasten the terminal, the pack bus bar, the thermal expansion member and the pressing member.

10. The battery module of claim 9, wherein the fastening member comprises a head interfering with the thermal expansion member, and is fixed at a lower end portion thereof by being engaged with a fixing part provided at the end plate.

11. The battery module of claim 8, wherein the pressing member comprises a flame retardant material.

12. The battery module of claim 8, wherein the pressing member has a shape corresponding to that of the thermal expansion member to cover and press inward a portion of a surface of the thermal expansion member.

13. The battery module of claim 1, further comprising:
a flame retardant cover covering a surface of the module frame; and
a pressing and fixing part protruding and extending from a front end of the flame retardant cover, and fastened to the thermal expansion member and the terminal on the thermal expansion member.

14. The battery module of claim 13, wherein the terminal, the pack bus bar, the thermal expansion member and the pressing and fixing part comprise a first fastening hole, a second fastening hole, a third fastening hole and a fifth fastening hole vertically penetrating therethrough, respectively, and
further comprising a fastening member simultaneously penetrating the first fastening hole, the second fastening hole, the third fastening hole and the fourth fastening hole to fasten the terminal, the pack bus bar, the thermal expansion member and the pressing and fixing part.

15. The battery module of claim 14, wherein the fastening member comprises a head interfering with the thermal expansion member, and is fixed at a lower end portion thereof by being engaged with a fixing part provided at the end plate.

16. The battery module of claim 12, wherein the pressing member has a shape corresponding to that of the thermal expansion member to cover and press inward a portion of a surface of the thermal expansion member.

17. The battery module of claim 1, wherein the thermal expansion member comprises a foam material containing a material selected from a group of thermal expansion resins comprising soft urethane, hard urethane, rigid polyurethane and phosphorus-based flame retardants.

18. A battery pack including a battery module of any one of claims 1 to 17, wherein a plurality of terminals are electrically connected in series or in parallel through a plurality of pack bus bars.

19. A vehicle including a battery pack of claim 18.
